# EUROPEAN PATENT APPLICATION

(11) **EP 3 771 110 A1**
(43) Date of publication of application: **27.01.2021**
(21) Application number: 20187241.3
(22) Date of filing: 22.07.2020
(51) Int. Cl.: H04B 1/38

(54) **DUAL CHANNEL INTERMEDIATE FREQUENCY COMBINER**

(30) Priority: 22.07.2019 US 201916518085
(71) Applicant: Rockwell Collins, Inc., Cedar Rapids, IA 52498 (US)
(72) Inventor: MEHOLENSKY, Michael C., Mario, IA 52302 (US); PAULSEN, Lee M., Cedar Rapids, IA 52403 (US); CAMPBELL, Thomas B., Cedar Rapids, IA 52403 (US)
(74) Representative: Dehns

(57) **Abstract**

An aircraft antenna system includes a modem (204) disposed within a pressure vessel (206) of an aircraft. The aircraft antenna system further includes an antenna module (202) including a first modulation sub-system (203a) configured to modulate a first set of signals to a first set of intermediate frequency (IF) signals at a first IF frequency of an IF spectral range, and a second modulation sub-system (203b) configured to modulate a second set of signals to a second set of IF signals at a second IF frequency of the IF spectral range. The antenna module further includes a multiplexer (222) configured to generate a set of composite signals including the first set and the second set of IF signals within the IF spectral range. In embodiments, the aircraft antenna system further includes one or more electrical lines (226) configured to transmit the set of composite signals from the antenna module to the modem.

## Description

### BACKGROUND

Satellite communication (SATCOM) datalinks often overlap in spatial coordinates, resulting in multiple signals being received by an antenna/receiver in a single geographic location. Various techniques have been used to separate and distinguish between signals, including narrow beamwidths, frequency diversity, and polarization diversity. However, in the context of aircraft antennas/receivers, there are a limited number of physical resources (e.g., cables, connectors, lines) which may be used to communicatively couple antennas disposed on the exterior of the aircraft (e.g., exterior to the pressure vessel of the aircraft) to modems and other devices disposed on the interior of the aircraft (e.g., inside the pressure vessel of the aircraft). With antennas configured to receive increasing numbers of signals, traditional antenna systems require increasing numbers of cables/connectors to couple the antenna to the modem. This requires more and/or larger holes to be formed within the exterior walls of the aircraft, which may lead to leaks, increased air movement, and increased moisture to be introduced within the aircraft.

### SUMMARY

An aircraft antenna system is provided as defined by claim 1.

A method of operating an aircraft antenna system is provided as defined by claim 12.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates an aircraft antenna system.
FIG. 2 illustrates an aircraft antenna system, in accordance with one or more embodiments of the present disclosure.
FIG. 3 illustrates a flowchart of a method for operating an aircraft antenna system, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

In the context of aircraft, signals received by an antenna disposed on an exterior surface of the aircraft (e.g., exterior to the pressure vessel of the aircraft) must be received, amplified, and transmitted to modems and other devices disposed on the interior of the aircraft (e.g., inside the pressure vessel of the aircraft). However, there are a limited number of physical resources (e.g., cables, wires, lines) which may be used to communicatively couple aircraft components exterior to the pressure vessel and aircraft components inside the pressure vessel. With antennas configured to receive increasing numbers of signals, more and/or larger holes must be formed within the exterior walls of the aircraft, which may lead to leaks, increased air movement, and increased moisture to be introduced within the aircraft.

Accordingly, embodiments of the present disclosure are directed to a system and method which cure one or more of the shortfalls of previous approaches identified above. Embodiments of the present disclosure are directed to a system and method configured to receive a plurality of signals, combine the plurality of signals into a composite signal, and transmit the plurality of signals to an aircraft modem via a single electrical line. More particularly, embodiments of the present disclosure are directed to an aircraft antenna system including an antenna module configured to receive multiple signals and downconvert the multiple signals to a shared intermediate frequency (IF) spectrum to be transmitted and processed at a modem.

It is contemplated herein that the system and method of the present disclosure may enable the transmission of multiple signals received from multiple transmitting devices from an aircraft antenna module to an aircraft modem with fewer physical resources (e.g., cables, wires, lines) than traditional aircraft antenna systems. Accordingly, embodiments of the present disclosure may enable reception of increasing numbers of signals, while reducing the number and/or size of holes required to be drilled within the exterior surface of an aircraft.

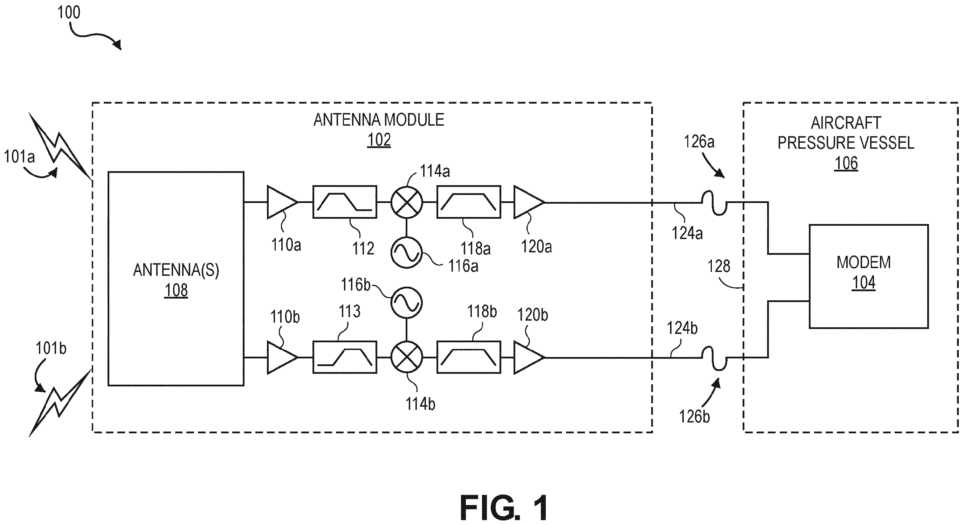

FIG. 1 illustrates an aircraft antenna system 100. In particular, aircraft antenna system 100 provides an example of a traditional aircraft antenna system. It is contemplated herein that a brief description of the aircraft antenna system 100 may provide a reference point against which attendant advantages of the present disclosure may be compared.

The aircraft antenna system 100 may include an antenna module 102 disposed exterior to an aircraft pressure vessel 106 and one or more electronic devices (e.g., modem 104) disposed within the aircraft pressure vessel 106. The antenna module 102 may include one or more antennas 108, one or more amplifiers 110a, 110b, 120a, 120b, one or more filters 112, 113, 118a, 118b, one or more mixers 114a, 114b, and one or more oscillators 116a, 116b).

During operation, one or more antennas 108 may receive multiple sets of signals 101a, 101b. For example, antenna 108 may receive a first set of signals 101a from a first transmitting device, and a second set of signals 101b from a second transmitting device. Upon receiving the sets of signals 101a, 101b, each separate signal is typically downconverted and transmitted to the modem 104 on separate electrical lines 124a, 124b. In this regard, individual sets of signals 101a, 101b may be received, downconverted, and transmitted to the modem on separate electrical lines 124a, 124b such that they may be separately processed at different modem 104 ports.

In traditional aircraft antenna systems (e.g., aircraft antenna system 100), maintaining separate sets of signals 101a, 101b on separate electrical lines 128a, 124b requires additional and/or larger holes to be drilled into the exterior surface 128 of the aircraft pressure vessel 106. For example, as shown in FIG. 1, the first set of signals 101a may be transmitted from the antenna module 102 via a first electrical line 124a, wherein the first electrical line is routed inside the aircraft pressure vessel 106 through a first port 126a disposed in the exterior surface 128 of the aircraft pressure vessel 106. By way of another example, the second set of signals 101a may be transmitted from the antenna module 102 via a second electrical line 124b, wherein the second electrical line is routed inside the aircraft pressure vessel 106 through a second port 126b disposed in the exterior surface 128 of the aircraft pressure vessel 106.

With ever-increasing numbers of signals (e.g., sets of signals 101a, 101b) having to be received by aircraft antennas, increasing numbers and/or sizes of ports 126a, 126b must be drilled in the exterior surface 128 of the aircraft pressure vessel 106. In addition to potentially compromising the structural integrity of an aircraft, these larger/more numerous ports 126a, 126b may lead to leaks within the aircraft pressure vessel 106. Furthermore, additional and/or larger ports 126a, 126b may increase the amount of air currents and/or moisture which is introduced into the aircraft pressure vessel 106, which may be hazardous to the efficient operation of the aircraft, as well as the safety of passengers and personnel aboard the aircraft.

Accordingly, embodiments of the present disclosure are directed to a system and method which cure one or more of the shortfalls of previous approaches identified above.

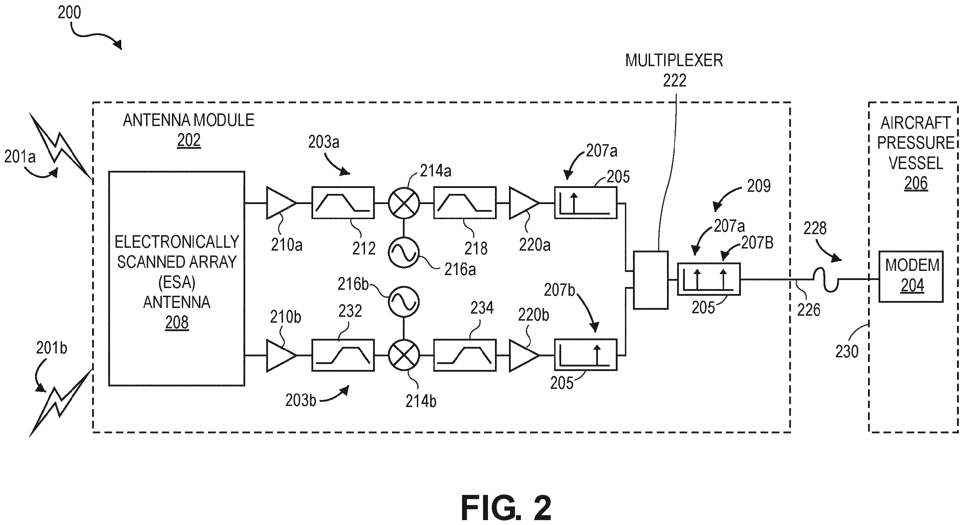

FIG. 2 illustrates an aircraft antenna system 200, in accordance with one or more embodiments of the present disclosure. The aircraft antenna system 200 may include, but is not limited to, an antenna module 102 and a modem 204.

In embodiments, the antenna module 202 of the aircraft antenna system 200 may be disposed exterior of an aircraft pressure vessel 206, wherein the modem 204 may be disposed on the interior of the aircraft pressure vessel 206. The modem 204 may include any aircraft modem 204 known in the art. Furthermore, while aircraft antenna system 200 illustrates an antenna module 202 communicatively coupled to a modem 204, this is not to be regarded as a limitation of the present disclosure, unless noted otherwise herein. In this regard, the antenna module 202 may be communicatively coupled to any number and/or type of electrical components known in the art disposed within the aircraft pressure vessel 206, including, but not limited to, modems (e.g., modem 204), analog-to-digital converters (ADCs), amplifiers, and the like.

In embodiments, the antenna module 202 may include, but is not limited to, an electrically scanned array (ESA) antenna 208, one or more modulation sub-systems 203a, 203b, and a multiplexer 222. During operation, the ESA antenna 208 may be configured to receive multiple sets of signals 201a, 201b. For example, as shown in FIG. 2, the ESA antenna 208 may be configured to receive a first set of signals 201a and a second set of signals 201b. In embodiments, the ESA antenna 208 may be configured to receive any number of signals from any number of transmitting devices. For instance, the first set of signals 201a may be received from a first transmitting device, and the second set of signals 201b may be received from a second transmitting device. By way of another example, the ESA antenna 208 may be configured to receive multiple sets of signals 201a-201n from a single transmitting device. Furthermore, it is contemplated herein that the ESA antenna 208 may be configured to receive sets of signals 201a, 201b from any type of transmitting device known in the art including, but not limited to, low Earth orbit (LEO) satellites, geosynchronous equatorial orbit (GEO) satellites, medium Earth orbit (MEO) satellites, and the like.

Similarly, the sets of signals 201a, 201b may include any types of signals known in the art including, but not limited to, Global Navigation Satellite System (GNSS) signals, internet protocol television (IPTV) signals, and the like. In particular, it is contemplated herein that embodiments of the present disclosure may enable aircraft antenna systems to receive IPTV signals without adding aircraft antenna components and/or undue complexity.

As noted previously herein, the sets of signals 201a, 201b received by the ESA antenna 208 may be distinguished/separated by any number of signal characteristics including, but not limited to, frequency, polarization, directional orientation, and the like. For example, the first set of signals 201a may exhibit a first frequency, wherein the second set of signals 201b may exhibit a second frequency different from the first frequency. By way of another example, the first set of signals 201a may exhibit a first polarization, wherein the second set of signals 201b may exhibit a second polarization different from the first polarization.

In embodiments, each set of signals 201a, 201b is transmitted from the ESA antenna 208 to an independent modulation sub-system 203a, 203b. For example, the first set of signals 201a may be transmitted from the ESA antenna 208 to a first modulation sub-system 203a, and the second set of signals 201b may be transmitted form the ESA antenna 208 to a second modulation sub-system 203b. While FIG. 2 illustrates two sets of signals 201a, 201b and two corresponding modulation sub-systems 203a, 203b, this is not to be regarded as a limitation of the present disclosure, unless noted otherwise herein. As noted previously herein, the antenna system 200/ESA antenna 208 may be configured to receive any n number of signals 201 (e.g., set of signals 201n). Accordingly, it is contemplated herein that the antenna module 208 may similarly include any n number of modulation sub-systems 203 (e.g., modulation sub-system 203n).

In embodiments, the modulation sub-systems 203a, 203b are configured to modulate the respective sets of signals 201a, 201 b to individual and distinct intermediate frequency (IF) signals (e.g., IF signal 207a, IF signal 207b) within a particular IF spectral range 205 such that the IF signals 207a, 207b may be combined into a set of composite signals 209 which may be transmitted to, and processed by, the modem 204.

For example, the first set of signals 201a may be transmitted along the first modulation sub-system 203a. The first set of signals 201a may be amplified by an amplifier 210a, and passed through a filter 212 (e.g., band-pass filter). The first set of signals 201a may subsequently be transmitted along the modulation sub-system 203a to a mixer 214a. In embodiments, the mixer 214a is communicatively coupled to an oscillator 216a. The oscillator 216a may be configured to provide a modulation signal to the mixer 214a, wherein the mixer 214a is configured to modulate (e.g., downconvert, filter) the first set of signals 201a to a first set of IF signals 207a by mixing the first set of signals 201a with the modulation signal provided by the oscillator 216a. The oscillator 216a may include any oscillator known in the art including, but not limited to, a tunable oscillator. For example, the oscillator 216a may be configured to adjust the modulation signal provided to the mixer 214a in order to adjust the frequency of the resulting set of IF signals 207a.

Continuing with the same example, the modulated set of signals may be passed through a filter 218 (e.g., band-pass filter) and an IF signal amplifier 220a. In embodiments, the modulation sub-system 203a is configured to modulate (e.g., downconvert) the first set of signals 201a to a first set of IF signals 207a at a first IF frequency within an IF spectral range 205, as shown in FIG. 2.

By way of another example, the second set of signals 201b may be transmitted along the second modulation sub-system 203b. The second set of signals 201b may be amplified by an amplifier 210b, and passed through filter 232 (e.g., band-pass filter). The second set of signals 201b my subsequently be transmitted along the modulation sub-system 203b to a mixer 214b. In embodiments, the mixer 214b is communicatively coupled to an oscillator 216b (e.g., tunable oscillator). The oscillator 216b may be configured to provide a modulation signal to the mixer 214b, wherein the mixer 214b is configured to modulate (e.g., downconvert) the second set of signals 201b to a second set of IF signals 207b by mixing the second set of signals 201b with the modulation signal provided by the oscillator 216b. The modulated set of signals may then be passed through a high-pass filter 234 and an IF signal amplifier 220b. In embodiments, the modulation sub-system 203b is configured to modulate (e.g., downconvert) the second set of signals 201b to a second set of IF signals 207b at a second IF frequency within the IF spectral range 205, as shown in FIG. 2.

In embodiments, the first set of IF signals 207a and the second set of IF signals 207 within the IF spectral range 205 are transmitted to a multiplexer 222 (e.g., diplexer). In embodiments, the multiplexer 222 is configured to receive the first set of IF signals 207a via a first input port, receive the second set of IF signals 207b on a second input port, and multiplex the signals into a set of composite signals 209 onto a third port. In this regard, the multiplexer 222 is configured to combine the first set of IF signals 207a and the second set of IF signals 207b and generate a set of composite signals 209 across the IF spectral range 205. In this regard, as may be seen in FIG. 2, the set of composite signals 209 may include the first set of IF signals 207a at the first IF frequency, and the second set of IF signals 207b at the second IF frequency of the IF spectral range 205.

While the antenna module 202 in FIG. 2 illustrates a multiplexer 222 including a diplexer configured to combine two sets of IF signals 207a, 207b into a single set of composite signals 209, this is not to be regarded as a limitation of the present disclosure, unless noted otherwise herein. In this regard, the antenna module 202 may include any multiplexer 222 known in the art including, but not limited to, a diplexer, a triplexer, a quadruplexer, and the like. For example, in additional and/or alternative embodiments, the antenna module 202 may include a triplexer configured to receive a first set of IF signals 207a, a second set of IF signals 207b, and a third set of IF signals (not shown) and combine the sets of IF signals into a single set of composite signals. Furthermore, it is contemplated herein that the antenna module may include any number of multiplexers (e.g., multiplexer 222, triplexer, quadruplexer) configured to combine sets of IF signals 207a-207n.

In embodiments, one or more electrical lines 226 may be configured to transmit the set of composite signals 209 from the antenna module 202 to the modem 204 for processing. For example, a single electrical line 226 may be routed from the multiplexer 222 to the modem 204 through a port 228 disposed in the exterior surface 230 of the aircraft pressure vessel 206. The electrical line 226 may be configured to transmit the set of composite signals 209 to a single modem port of the modem 204. The one or more electrical lines 226 may include any device known in the art for transmitting electrical signals including, but not limited to, wires, cables, vias, and the like. Additionally, the one or more ports 228 disposed in the exterior surface 230 of the aircraft pressure vessel may include, but are not limited to, windows, holes, apertures, and the like.

As noted previously herein, the ability to transmit sets of composite signals 209 including multiple sets of IF signals 207a-207n to the modem on a single electrical line 226 may decrease the size and/or number of ports 228 disposed in the exterior surface 230 of the aircraft pressure vessel 206. By reducing then size and/or number of holes within the exterior surface 230 of the aircraft, moisture and air currents introduced into the aircraft may be reduced. Additionally, it is contemplated herein that the antenna system 200 of the present disclosure may support efficient transmission of ESA antennas 208 which are able to receive increasing numbers of signals 201a-201n from a plurality of transmitting entities.

Although example embodiments of the present disclosure are shown and described in an aircraft environment, the inventive concepts of the present disclosure may be configured to operate in alternative and/or additional contexts, unless noted otherwise herein. For example, the embodiments of the present disclosure may be incorporated into the any air, land, or water-based vehicle (e.g., aircraft, automobiles, boats, ships, military vehicles). Thus, references to "aircraft," "airplanes," "avionics," and like terms should not be interpreted as a limitation on the present disclosure, unless noted otherwise herein.

It is further noted herein that, where the environment includes an aircraft environment, it is noted herein the embodiments of antenna system 200 may be configured in accordance with avionics guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

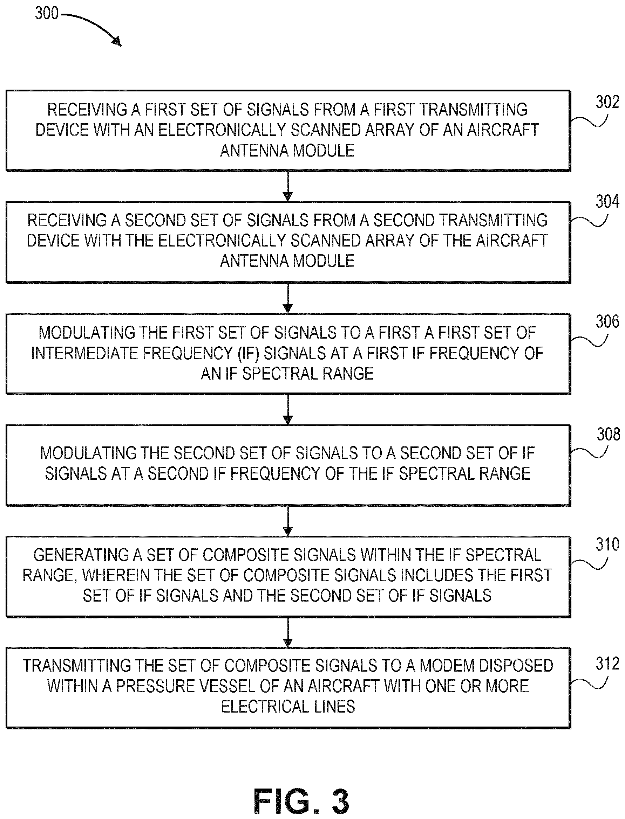

FIG. 3 illustrates a flowchart of a method 300 for operating an aircraft antenna system, in accordance with one or more embodiments of the present disclosure. It is noted herein that the steps of method 300 may be implemented all or in part by antenna system 200. It is further recognized, however, that the method 300 is not limited to the antenna system 200 in that additional or alternative system-level embodiments may carry out all or part of the steps of method 300.

In a step 302, a first set of signals is received from a first transmitting device with an electronically scanned array of an aircraft antenna module. In a step 304, a second set of signals is received from a second transmitting device with the electronically scanned array of the aircraft antenna module. For example, as shown in FIG. 2, an ESA antenna 208 of an antenna module 202 may be configured to receive a first set of signals 201a from a first transmitting device, and a second set of signals 201b from a second transmitting device. In some embodiments, the ESA module 208 may be configured to receive multiple sets of signals 201a-201n form a single transmitting device. For example, the first set of signals 201a and the second set of signals 201 b may originate from a single transmitting device. The ESA antenna 208 may be configured to receive signals from any transmitting device known in the art including, but not limited to, low Earth orbit (LEO) satellites, geosynchronous equatorial orbit (GEO) satellites, medium Earth orbit (MEO) satellites, and the like.

In a step 306, the first set of signals is modulated to a first set of intermediate frequency (IF) signals at a first IF frequency of an IF spectral range. For example, a first modulation sub-system 203a may be configured to receive the first set of signals 201a and modulate (e.g., filter, downconvert) the first set of signals 201a to a first set of IF signals 207a at a first frequency within an IF spectral range 205.

In a step 308, the second set of signals is modulated to a second set of intermediate frequency (IF) signals at a second IF frequency of the IF spectral range. For example, a second modulation sub-system 203b may be configured to receive the second set of signals 201 b and modulate (e.g., filter, downconvert) the second set of signals 201b to a second set of IF signals 207b at a second frequency within the IF spectral range 205. In embodiments, the second frequency of the second set of IF signals 207b is a different frequency than the first frequency of the first set of IF signals 207a.

In a step 310, a set of composite signals within the IF spectral range is generated. The set of composite signals may include the first set of IF signals and the second set of IF signals. For example, a multiplexer 222 may be configured to receive the first set of IF signals 207a via a first input port, receive the second set of IF signals 207b on a second input port, and multiplex the signals into a set of composite signals 209 onto a third output port. In this regard, the multiplexer 222 is configured to combine the first set of IF signals 207a and the second set of IF signals 207b and generate a set of composite signals 209 across the IF spectral range 205.

In a step 312, the set of composite signals is transmitted to a modem disposed within a pressure vessel of the aircraft with one or more electrical lines. For example, an electrical line 226 may be configured to receive the set of composite signals 209 and transmit the set of composite signals 209 from the antenna module 202 to a modem 204 disposed within a pressure vessel 206 of an aircraft.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft antenna system comprising:
a modem (204) disposed within a pressure vessel (206) of an aircraft;
an antenna module (202) comprising:
an electronically scanned array, ESA (208), configured to receive a first set of signals and a second set of signals different from the first set of signals;
a first modulation sub-system (203a) configured to modulate the first set of signals to a first set of intermediate frequency (IF) signals at a first IF frequency of an IF spectral range;
a second modulation sub-system (203b) configured to modulate the second set of signals to a second set of IF signals at a second IF frequency of the IF spectral range;
a multiplexer (222) configured to generate a set of composite signals within the IF spectral range, wherein the set of composite signals includes the first set of IF signals and the second set of IF signals; and
one or more electrical lines (226) configured to transmit the set of composite signals from the antenna module to the modem.

2. The aircraft antenna system of Claim 1, wherein the antenna module (202) is disposed exterior to the pressure vessel of the aircraft, wherein the one or more electrical lines are routed from the antenna module to the modem through a port within an exterior surface of the pressure vessel of the aircraft.

3. The aircraft antenna system of Claim 1 or 2, wherein the one or more electrical lines comprise a single electrical line.

4. The aircraft antenna system of any preceding Claim, wherein the first set of signals exhibits at least one of a first frequency, a first polarization, or a first directional orientation, and the second set of signals exhibits at least one of a second frequency different from the first frequency, a second polarization different from the first polarization, or a second directional orientation different from the first directional orientation.

5. The aircraft antenna system of any preceding Claim, wherein the ESA is further configured to receive an additional set of signals.

6. The aircraft antenna system of Claim 5, wherein the antenna module further comprises an additional modulation sub-system configured to modulate the additional set of signals to an additional set of IF signals at an additional IF frequency of the IF spectral range,
wherein the multiplexer device is configured to generate a set of composite signals within the IF spectral range, wherein the set of composite signals includes the first set of IF signals, the second set of IF signals, and the additional set of IF signals.

7. The aircraft antenna system of any preceding Claim, wherein the first modulation sub-system comprises one or more band-pass filters (212) and a first frequency mixer (214a), and wherein the second modulation sub-system comprises one or more band-pass filters (222) and a second frequency mixer (214b).

8. The aircraft antenna system of Claim 7, wherein the first modulation sub-system further comprises a first tunable oscillator (216a), and wherein the second modulation sub-system further comprises a second tunable oscillator (216b).

9. The aircraft antenna system of any preceding Claim, wherein the first set of signals are received from a first transmitting device including a first satellite, and the second set of signals are received from a second transmitting device including a second satellite different from the first satellite.

10. The aircraft antenna system of Claim 9, wherein the first satellite comprises a low Earth orbit, LEO,, satellite, and the second satellite comprises a geosynchronous equatorial orbit GEO, satellite.

11. The aircraft antenna system of any preceding Claim, wherein at least one of the first set of signals or the second set of signals comprise a set of internet protocol television, IPTV, signals.

12. A method of operating an aircraft antenna system, comprising:
receiving a first set of signals with an electronically scanned array, ESA, of an aircraft antenna module;
receiving a second set of signals with the electronically scanned array of the aircraft antenna module;
modulating the first set of signals to a first a first set of intermediate frequency (IF) signals at a first IF frequency of an IF spectral range;
modulating the second set of signals to a second set of IF signals at a second IF frequency of the IF spectral range;
generating a set of composite signals within the IF spectral range, wherein the set of composite signals includes the first set of IF signals and the second set of IF signals; and
transmitting the set of composite signals to a modem disposed within a pressure vessel of an aircraft with one or more electrical lines.

13. The method Claim 12, wherein the aircraft antenna module is disposed exterior to a pressure vessel of the aircraft, wherein the one or more electrical lines are routed from the aircraft antenna module to the modem through a port within an exterior surface of the pressure vessel of the aircraft.

14. The method Claim 12 or 13, wherein the one or more electrical lines comprise a single electrical line.

15. The method Claim 13 or 14, further comprising:
receiving an additional set of signals with the ESA of the aircraft antenna module;
modulating the additional set of signals to an additional set of IF signals at an additional IF frequency of the IF spectral range; and
generating the set of composite signals within the IF spectral range, wherein the set of composite signals includes the first set of IF signals, the second set of IF signals; and the additional set of IF signals.
